# EUROPÄISCHE PATENTSCHRIFT

(11) **EP 1 692 062 B1**
(45) Veröffentlichungstag und Bekanntmachung des Hinweises auf die Patenterteilung: **17.10.2007**
(21) Anmeldenummer: 04802706.4
(22) Anmeldetag: 05.11.2004
(51) Int. Cl.: B65G 69/00

(54) **ANDOCKPUFFER**
DOCKING BUFFER
ATTELAGE D'AMORTISSEUR

(30) Priorität: 05.12.2003 DE 10358041
(43) Veröffentlichungstag der Anmeldung: 23.08.2006
(73) Patentinhaber: Deutsche Post AG, 53113 Bonn (DE)
(72) Erfinder: OTT, Rainer, 56745 Volkesfeld (DE); SCHMATZ, Hans, 53881 Euskirchen (DE)
(74) Vertreter: Neumann, Günter
(86) Internationale Anmeldenummer: PCT/DE2004/002489
(87) Internationale Veröffentlichungsnummer: WO 2005/056442

(56) Entgegenhaltungen:
- EP-A- 1 182 155
- DE-U1- 9 201 381
- US-A- 6 120 871

## Beschreibung

Die Erfindung betrifft einen Andockpuffer zum Anbringen an Rampen, insbesondere Laderampen und Überladebrücken, mit einem elastischen Dämpfungselement zwischen zwei U-profilförmigen Teilen aus hartem stoßfesten Material, deren Schenkel benachbart und relativ beweglich zueinander angeordnet sind. Er hat vor allem die Funktion, schädliche Wirkungen an Bauwerk und Fahrzeug beim Andocken eines Fahrzeuges an Rampen zu vermeiden.

In Logistikzentren und anderen Umschlagplätzen, die von Nutzfahrzeugen mit Frachtgütern angefahren werden, muss eine Verbindung zwischen der Ladefläche des Nutzfahrzeuges zu dem jeweiligen Gebäude hergestellt werden. Um einen begehbaren oder mit Rollen versehenen, für Flurförderzeuge passierbaren Übergang zu schaffen, werden hier häufig Überladebrücken in beziehungsweise an dem Gebäude eingesetzt, die in ihrer Höhe und ihrer Länge verstellbar sind. Nach dem Andocken des Nutzfahrzeuges können diese auf dessen Ladefläche aufgelegt werden. Bei der dazu erforderlichen dichten Annäherung des Fahrzeuges an das Gebäude ist es erwünscht, dass durch eine Berührung Beschädigungen am Nutzfahrzeug und am Gebäude vermieden werden.

Die zur Vermeidung von möglichen Schäden am Gebäude eingesetzten, meist angebauten Dämpfungselemente sind einer sehr starken Beanspruchung beim rauen Betrieb der andockenden Lastkraftwagen ausgesetzt. Bekannte Lösungen, wie sie z. B. von den Herstellern der Überladebrücken angeboten werden, bestehen meistens aus einem Gummiklotz, der auf das Gebäude direkt aufgesetzt wird. Diese Gummiklötze sind bereits nach kurzer Zeit in der Praxis so stark beschädigt und verschlissen, dass sie völlig wirkungslos und nicht mehr in der Lage sind, Energie zu absorbieren. In der Folge werden die Gebäude und Überladebrücken stark beschädigt.

Ein weiterentwickeltes Dämpfungselement wird in dem Gebrauchsmuster DE 9201381.3 U 1 beschrieben. Hier wird eine Lösung vorgestellt, bei der der Anfahrpuffer an einer Rahmenkonstruktion angeordnet und in seiner Höhe verstellbar ist, um den unterschiedlichen Höhen der andockenden Lkws gerecht zu werden.

In der EP 1 182 155 A2 wird ein Rammpuffer offenbart, der aus einem C-profilförmigen Teil und einem hutprofilförmigen Teil besteht, dessen Seitenflansche im C-profilförmigen Teil benachbart und relativ beweglich zu dessen Seitenflanschen angeordnet sind, wobei sich Stege aus dem C-profilförmigen Teil erstrecken. Innerhalb dieser Teile ist ein Kern aus elastisch verformbarem Dämpfungsmaterial vorgesehen. Der Puffer selbst kann in seiner Höhe über ein federndes Element in Verbindung mit einer Hakenverriegelung zusätzlich positioniert werden.

Hier handelt es sich um eine Lösung, bei der das federnde Dämpfungselement in einer aufwändig konstruierten und damit kostenintensiven Stahlkonstruktion untergebracht ist.
Als weitere Probleme sind bei dieser technischen Lösung anzusehen, dass am C-profilförmigen und dem hutprofilförmigen Teil jeweils vier Kantungen an den Elementen, die das Federelement umschließen, erforderlich sind. Zur Einhaltung der erforderlicher Toleranzen bei den gekanteten Stahlbauteilen ist ein relativ hoher Aufwand erforderlich. Darüber hinaus verbindet sich mit der Lösung gemäß EP 1 182 155 A2 ein verhältnismäßig hoher Materialanteil.

Die eingangs beschriebene Lösung ist nur begrenzt haltbar und die genannten Weiterentwicklungen sind sehr aufwändig in ihrer Konzeption. Die dort verwendeten Profile sind nur aufwändig herzustellen, da sie jeweils 4 Linien aufweisen, die plastisch verformt werden müssen. Bei diesen sogenannten "Kantungen" treten erhebliche maßliche Probleme auf, da sich diese in der Reihenfolge der Kantungen addieren. Es kann nur mit hohem Aufwand und somit hohen Kosten ein Rammpuffer hergestellt werden, der die erforderlichen Toleranzen aufweist, um in der praktischen Anwendung brauchbar zu sein.

Das in jedem Fall notwendige Spiel zwischen dem Hut- und C-Profil führt dazu, dass je nach Druckstelle des andockenden Fahrzeuges auf das bewegliche Profil des Puffers dieses Spiel eine seitliche Verschiebung dieses Profils hervorruft, welches eine Veränderung des Breitenmaßes zwischen den beiden Puffern an dem System "Überladebrücke" erzeugt. Diese Veränderung wird ohne äußere Einwirkung nicht wieder zurückgestellt und hat somit negative Auswirkungen: Die Breite zwischen den Puffern vergrößert sich, und beim Andockvorgang wird die Wahrscheinlichkeit, dass beide Puffer mit der Belastung durch den andockenden Lastkraftwagen beaufschlagt werden, erheblich reduziert. Der Lastkraftwagen fährt ggf. sogar zwischen die beiden Puffer.

Des Weiteren tritt bei dieser Lösung ein weiterer Nachteil auf, wenn die Prallfläche des Stahlbauteils einseitig vom Lastkraftwagen angestoßen wird. Dann kommt es dazu, dass sich das sogenannte C- oder Hutprofil gegen das jeweils andere Bauteil schiebt. Es kommt zu einer sehr starken Reibung von Stahl auf Stahl, welche bereits nach kurzer Betriebszeit zum Materialabtrag zwischen diesen beiden Flächen führt. In der Folge sind dann Klemmungen oder ein "Hängenbleiben" zwischen diesen Bauteilen zu erwarten. Das federnde Element wird schließlich wirkungslos, wenn ein Lastkraftwagen gegen diesen Puffer stößt.

In der US 6,120,871 wird ein Puffer offenbart, der aus zwei ineinandergreifenden U-Teilen besteht, die ein elastisches Dämpfungselement umschließen. Die Schenkel der beiden U-Teile sind jeweils gerade ausgeführt und enden in Abwinklungen von jeweils 90° um den Zusammenhalt der gesamten Einheit zu gewährleisten. Mit diesem Puffer verbindet sich jedoch das Problem, dass er bei außermittig angreifenden Kräften leicht verkantet.

Aufgabe der Erfindung ist es daher, einen verbesserten, einfach konstruierten und kostengünstig herstellbaren Andockpuffer bereitzustellen, der auch einen sicheren Schutz bei nicht mittiger Stoßbelastung bietet.

Erfindungsgemäß wird die Aufgabe durch einen Andockpuffer mit den Merkmalen des Anspruches 1 gelöst.

Vorteilhafte Ausgestaltungen des erfindungsgemäßen Andockpuffers ergeben sich aus den Merkmalen der Ansprüche 2 bis 5.

Mit der Erfindung verbindet sich der Vorzug, dass es sich um einen konstruktiv einfach gestalteten und dadurch kostengünstig herstellbaren Andockpuffer handelt. Durch eine größere Breite des beweglichen Teiles des Andockpuffers im Verhältnis zum unbeweglichen, des an der Rampe und dergleichen angebrachten Teiles ist eine größere Anprallfläche für das andockende Fahrzeug gegeben und somit auch die Wahrscheinlichkeit größer, dass das Fahrzeug auf diese Fläche trifft. Derartig konstruktiv gestaltete Andockpuffer behalten ihre volle Funktionsfähigkeit auch bei einer seitlichen Belastung, ohne dass es zu problematischen Reibungen der Schenkel der U-Profilteile kommt.

Eine besonders bevorzugte Ausführungsform sieht vor, dass zwei Flachstähle divergierend um einen von 90° abweichenden Winkel zur Grundfläche aufgeschweißt sind und so ein U-Profil bilden, das keine Kantungen aufweist und der Andockpuffer daher nur in seinem beweglichen Teil zwei Kantungen besitzt.

Im folgenden soll die Erfindung in ihrem Aufbau und in ihrer Funktion an Hand von Zeichnungen näher erläutert werden. Es zeigen
- **Fig. 1**: die Draufsicht auf eine Ausführungsform des Andockpuffers mit auf eine Grundplatte geschweißten Schenkeln im Ausgangszustand
- **Fig. 2**: die Draufsicht auf eine Ausführungsform des Andockpuffers mit auf eine Grundplatte geschweißten Schenkeln bei einseitiger Stoßbelastung
- **Fig. 3**: die Draufsicht auf einen lösbar an einer Rampe angebrachten Andockpuffer
- **Fig. 4**: die Draufsicht auf einen Andockpuffer mit Rollenlagern an den Schenkeln
- **Fig. 5**: die Draufsicht auf an einer Überladebrücke angebrachte Andockpuffer
- **Fig. 6**: die Vorderansicht der Überladebrücke mit Andockpuffer gemäß Fig. 6.

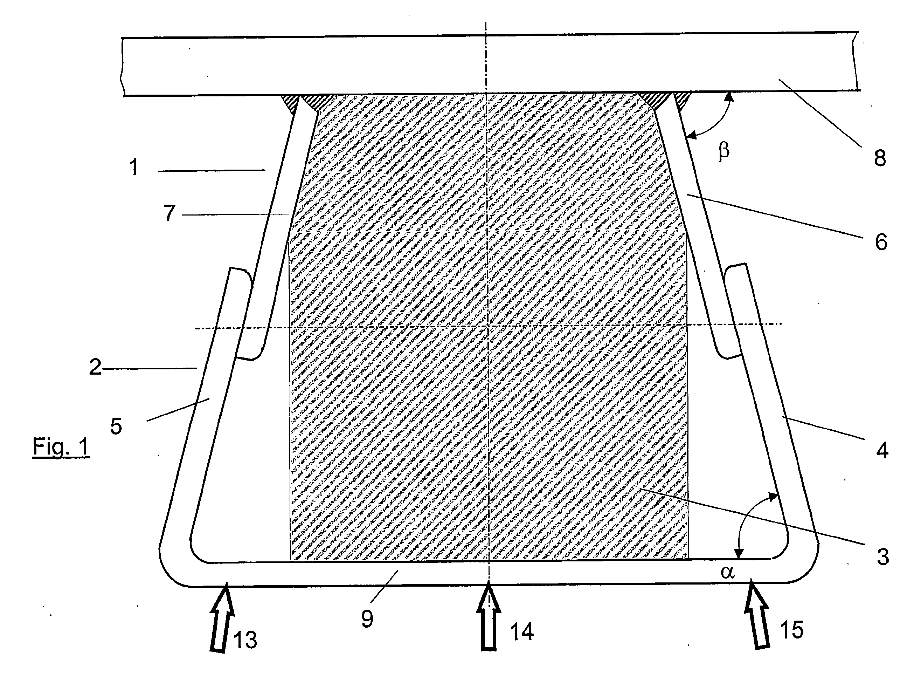

**Fig. 1** zeigt eine Ausführungsform des erfindungsgemäßen Andockpuffers in seinen wesentlichen Grundelementen.
Das erste U-profilförmige Teil 1 mit den ersten Schenkeln 6 und 7 wird hier durch auf der Grundplatte 8 vertikal und divergierend unter einem von 90° zur Grundplatte 8 abweichenden Winkel β aufgeschweißte Flachstähle gebildet. Die Öffnungsweiten zwischen den zweiten Schenkeln 4 und 5 sowie den ersten Schenkeln 6 und 7 und die Größen der Winkel α und β sind so gewählt, dass die zweiten Schenkel 4 und 5 die ersten Schenkel 6 und 7 umklammern. Deutlich wird gezeigt, dass das zweite U-profilförmige Teil 2 eine größere Breite besitzt als das erste U-profilförmige Teil 1 und damit eine größere Gewähr für ein sicheres Andocken bietet. Bei dem zweiten U-profilförmigen Teil 2 sind dessen zweiten Schenkel 4 und 5 konvergent um einen von 90° zur Grundfläche 9 abweichenden Winkel α abgekantet. Die Winkel α und β sind vom Nennmaß her gleich, jedoch sind die zulässigen Toleranzen so zu wählen, dass die Winkel α und β mit einer kleinen Minustoleranz für die Herstellung belegt werden. Hierdurch wird vermieden, dass sich ein zu großer Winkel ergibt, der sonst die Umklammerung des ersten U-profilförmigen Teiles 1 durch das zweite U-profilförmige Teil 2 aufheben würde. Das erste U-profilförmige Teil 1 und das zweite U-profilförmige Teil 2 besteht aus hochfestem Material, um bei Stoß Verschleiß und Verformung zu minimieren. Als Dämpfungselement 3 können Druckfedern, an sich bekannte Elastomere oder Gummimischungen in geeigneter Zusammensetzung und unterschiedlichster Formgebung, wie das aus den **Fig. 1, 3 und 4** sichtbar ist, eingesetzt werden.

Wird nun das zweite U-profilförmige Teil 2 durch ein andockendes Fahrzeug in Richtung der Grundplatte 8 gedrückt, wird das Dämpfungselement 3 elastisch verformt, und es kommt zu der gewünschten Federwirkung. Das Dämpfungselement 3 drückt das zweite U-profilförmige Teil 2 bei äußerer Entlastung in dessen Grundstellung zurück und zentriert sich dann wieder selbständig. Das Abstandsmaß zwischen dem ersten U-profilförmigen Teil 1 und dem zweiten U-profilförmigen Teil 2 stellt sich gewissermaßen selbständig wieder auf "null". Durch unterschiedliche Ausgestaltung des Dämpfungselementes 3 sowohl hinsichtlich der Materialwahl als auch der Formgebung können hier unterschiedlichste Federkennlinien (z.B.: progressiv, degressiv, linear, Sprungfunktionen) erzeugt werden. Der Andockpuffer hat außerdem den Vorteil, dass das Dämpfungselement 3 mit wenigen Handgriffen ohne zusätzliche Werkzeuge gewechselt und schnell gegen ein anderes, beispielsweise eines mit anderen Eigenschaften, getauscht werden kann.

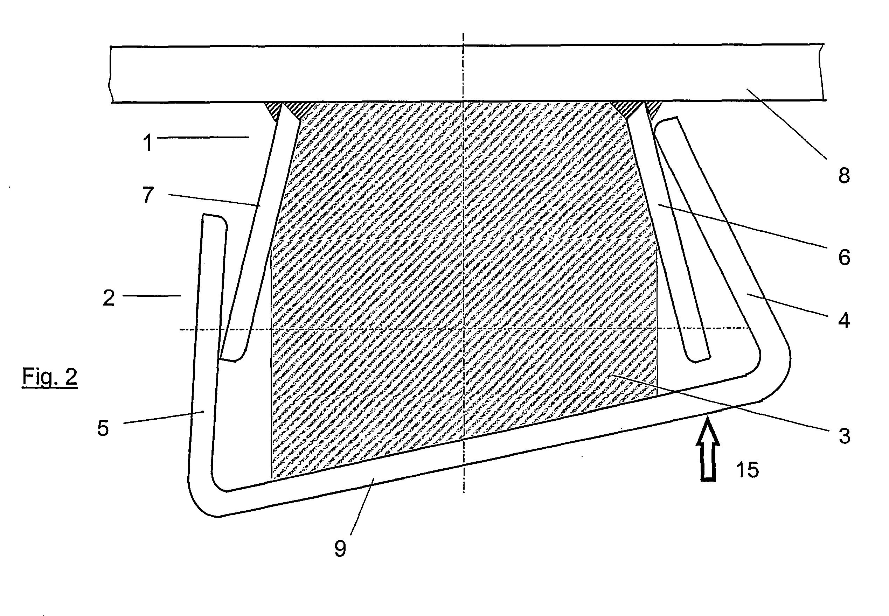

**Fig. 2** zeigt einen Andockpuffer in Funktion bei nicht mittiger Stoßbelastung. Deutlich ist zu erkennen, dass sich das zweite U-profilförmige Teil 2 durch die einseitige Belastung an der Stoßstelle 15 vom Ende des Schenkels 7 des ersten U-profilförmigen Teiles 1 abhebt und am Ende des Schenkels 6 quasi ein Drehpunkt besteht. Wird das zweite U-profilförmige Teil 2 an der Stoßstelle 14 mittig auf dessen Grundfläche 9 mit Druck beaufschlagt, heben sich beide Schenkel 4 und 5 von den Enden der Schenkel 6 und 7 des ersten U-profilförmigen Teiles 1 ab. Es kommt zu einer Art Schwimmstellung des zweiten U-profilförmigen Teiles 2. Dieses kann sich dadurch seitlich in einem gewissen Rahmen frei bewegen und ermöglicht somit eine seitlich Anpassung im gedrückten Zustand. In beiden Fällen werden im Unterschied zu bekannten technischen Lösungen problematische Reibungen zwischen den Schenkeln 4 und 6 sowie 5 und 7 sowie deren Verschleiß vermieden.

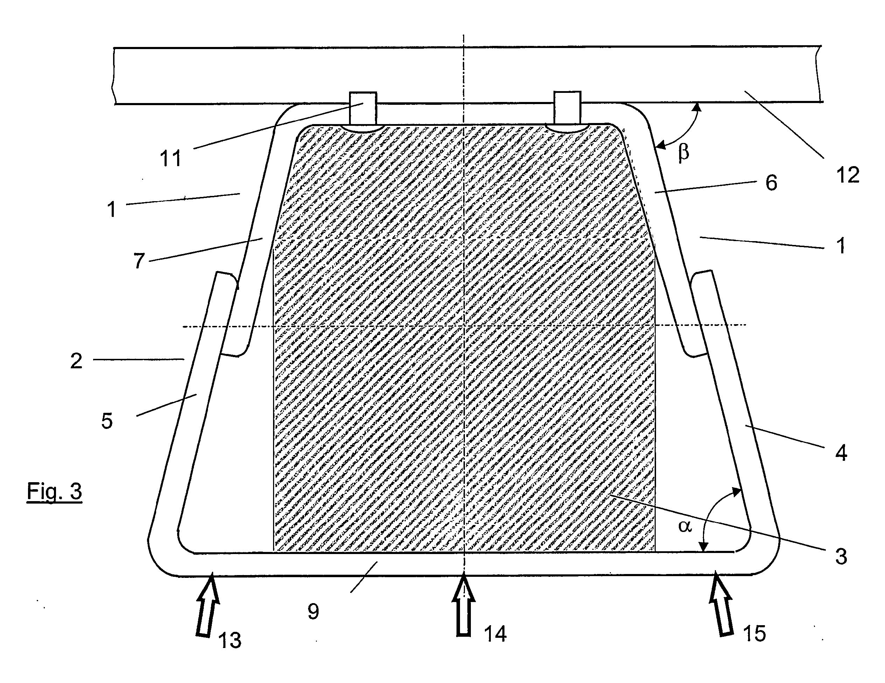

Gemäß der Erfindung kann das erste U-profilförmige Teil 1 -wie aus **Fig. 3** ersichtlich ist - auch durch ein nicht rechtwinklig gekantetes U-Profil gebildet sein. Bei dieser Ausführungsform werden die gleichen Geometriebedingungen hinsichtlich der Winkel α und β sowie der Tiefe der Schenkel 4, 5, 6 und 7 gewählt, wie sie bereits in **Fig. 1** beschrieben sind. Der Andockpuffer ist hier mit einer mechanisch lösbaren Verbindung 11 an einer Rampe 12 angebracht. Diese Ausführungsform des Andockpuffers hat den Vorzug, vorhandene Anlagen kostengünstig nachrüsten zu können.
Um eine sonst aufwändige Höhenverstellung des hier vertikal angeordneten Andockpuffers zu vermeiden, kann die Länge des ersten U-profilförmigen Teiles 1 und des zweiten U-profilförmigen Teiles 2 entsprechend den konkreten Erfordernissen gewählt werden.
Am unteren Ende des ersten U-profilförmigen Teiles 1 ist eine Stützvorrichtung, beispielsweise ein gelochtes Stützblech oder ein Gitter angebracht, um ein Herunterfallen sowohl des Dämpfungselementes 3 als auch des beweglichen zweiten U-profilförmigen Teiles 2 zu verhindern und das Ansammeln von Feuchtigkeit, insbesondere von Regenwasser zu vermeiden.
Das zweite U-profilförmige Teil 2 kann außerdem durch eine zusätzliche Kantung, bei entsprechendem Zuschnitt, mit einem Deckblech versehen werden.

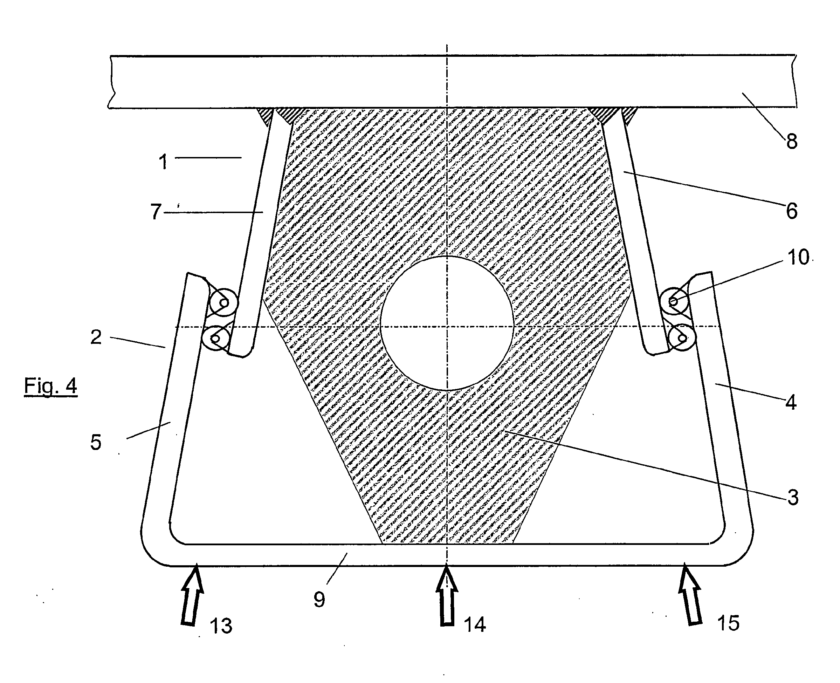

Die **Fig. 4** zeigt eine Ausführungsform des erfindungsgemäßen Andockpuffers, bei der zwischen den Schenkeln 4 und 6 sowie 5 und 7 Rollenlager 10 angeordnet sind. Um das bewegliche zweite U-profilförmige Teil 2 zu halten, können die Rollen zugleich als Anschlag genutzt werden.

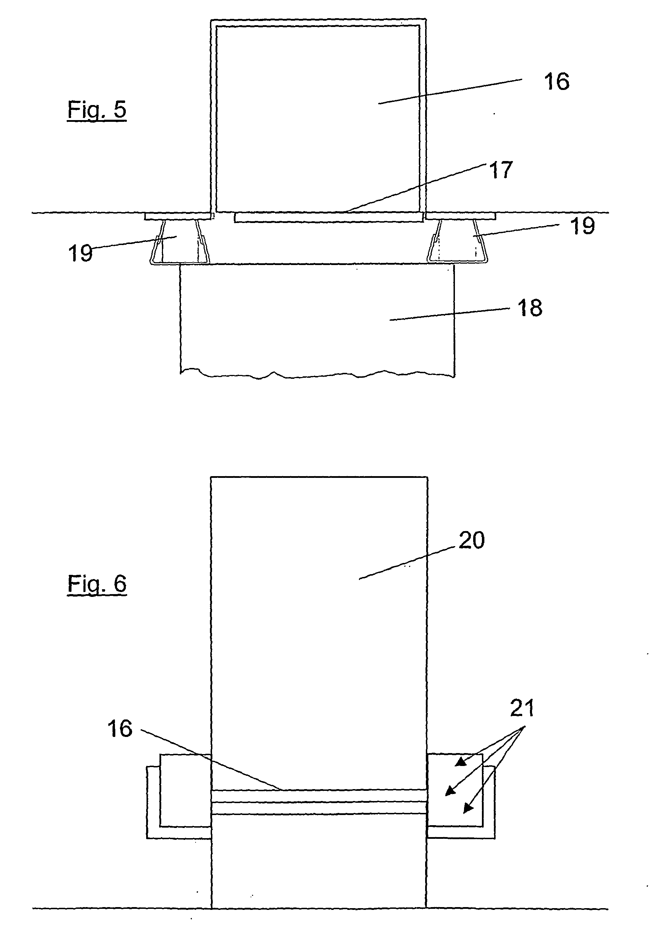

Die **Fig. 5** und die **Fig. 6** zeigen beispielhaft eine mögliche Anbausituation des Andockpuffers 19 und mit den Stoßstellen 21 mögliche Andocksituationen für Fahrzeuge. Es ist sichtbar, dass die Erfindung mit den Stossstellen 21 am beweglichen zweiten U-profilförmigen Teil 2 deutlich mehr Freiheitsgrade gegenüber den bekannten technischen Lösungen aufweist und insofern günstigere Voraussetzungen bietet, Schäden an Gebäuden - sogenannte Zwängungsspannungen in der Anschlusskonstruktion - zu vermeiden.

### BEZUGSZEICHENAUFSTELLUNG

- 1: U-profilförmiges Teil
- 2: U-profilförmiges Teil
- 3: Dämpfungselement
- 4: Schenkel
- 5: Schenkel
- 6: Schenkel
- 7: Schenkel
- 8: Grundplatte
- 9: Grundfläche
- 10: Rollenlager
- 11: mechanisch lösbare Verbindung
- 12: Laderampe
- 13: Stoßstelle
- 14: Stoßstelle
- 15: Stoßstelle
- 16: Überladebrücke
- 17: Vorschub oder Klappauffahrt
- 18: Ladefläche
- 19: Andockpuffer
- 20: Tor
- 21: mögliche Stoßstellen

## Patentansprüche

1. Andockpuffer zum Anbringen an Rampen, insbesondere Laderampen und Überladebrücken, mit einem elastischen Dämpfungselement (3) zwischen einem ersten U-profilförmigen Teil (1) mit ersten Schenkeln (6; 7) und einem zweiten U-profilförmigen Teil (2) mit zweiten Schenkeln (4; 5) aus hartem stoßfesten Material, wobei die ersten Schenkel (6; 7) und die zweiten Schenkel (4; 5) benachbart und relativ beweglich zueinander angeordnet sind, **dadurch gekennzeichnet, dass** die zweiten Schenkel (4; 5) des zweiten U-profilförmigen Teiles (2) konvergent um einen von 90° zu einer Grundfläche (9) abweichenden Winkel (α) gerichtet sind und die ersten Schenkel (6; 7) des ersten U-profilförmigen Teiles (1) divergierend einen von 90° zu einer Grundplatte (8) abweichenden Winkel (β) bilden, wobei Öffnungsweiten zwischen Enden der zweiten Schenkel (4; 5) sowie Enden der ersten Schenkel (6; 7) und Größen der Winkel (α; β) so gewählt sind, dass die zweiten Schenkel (4; 5) die ersten Schenkel (6; 7) umklammern.

2. Andockpuffer nach Anspruch 1, **dadurch gekennzeichnet, dass** die Größe der Winkel (α; β) in Abhängigkeit von Längen der ersten Schenkel (6; 7) und der zweiten Schenkel (4; 5) so gewählt sind, dass bei einseitiger Belastung des zweiten U-profilförmigen Teiles (2) dessen zweiten Schenkel (4; 5) die ersten Schenkel (6; 7) aus einer Umklammerung räumlich nicht verlassen können.

3. Andockpuffer nach Anspruch 1 oder 2, **dadurch gekennzeichnet, dass** die ersten Schenkel (6; 7) auf der Grundplatte (8) geschweißt sind und so das erste U-profilförmige Teil (1) bilden.

4. Andockpuffer nach einem der Ansprüche 1 bis 3, **dadurch gekennzeichnet, dass** er mittels einer mechanisch lösbaren Verbindung (11) mit der Grundplatte (8) an einer Rampe (12) angebracht ist.

5. Andockpuffer nach einem der Ansprüche 1 bis 4, **dadurch gekennzeichnet, dass** am unteren Ende des ersten U-profilförmigen Teiles (1) eine Stützvorrichtung, vorzugsweise ein gelochtes Stützblech oder ein Gitter, angeordnet ist.

## Claims

1. Docking buffer to be attached to ramps, especially loading ramps and loading bridges, with elastic damping element (3) between a first U-shaped part (1) with first limbs (6; 7) and a second U-shaped part (2) with two limbs (4; 5) made of hard, shock-resistant material, whereby the first limbs (6; 7) und the second limbs (4; 5) are attached next to and relatively mobile to limbs, **characterized by** the second limbs (4; 5) of the second U-shaped part (2) are convergent around an angle (α) deviating from 90° to a base plate (9) and the first limb (6; 7) of the first U-shaped part (1) are convergent around an angle (β) deviating from 90° to a base plate (8), whereby the opening widths between the ends of the limbs (4; 5) and the ends of the first limbs (6; 7) and the sizes of the angles (α; β) are selected so that the second limbs (4; 5) enclose the first limbs (6; 7).

2. Docking buffer in accordance with claim 1, **characterized by** the size of the angle (α; β) depends on the lengths of the first limbs (6; 7) and the second limb (4; 5) are selected so that in cases of a unilateral impact of the second U-shaped part (2) its second limb (4; 5) cannot slip out of the enclosure by the first limb (6; 7).

3. Docking buffer in accordance with claim 1 or 2, **characterized by** the first limb (6; 7) being welded to the base plate (8) and so shape the first U-shaped part (1).

4. Docking buffer in accordance with one of the claims 1 to 3, **characterized by** it being attached to a ramp (12) with the base plate (8) by means of a mechanically detachable connection (11).

5. Docking buffer in accordance with one of the claims 1 to 4, **characterized by** a supporting device, preferably of perforated metal or a grill being attached to the bottom end of the first U-shaped part (1).

## Revendications

1. Tampon d'amarrage à fixer aux rampes, notamment aux rampes de chargement et ponts de transbordement, équipé d'un élément amortisseur résilient (3) placé entre un premier élément profilé en U (1) avec deux bras (6; 7) et un deuxième élément profilé en U (2) avec deux bras (4; 5), réalisé en matériau dur et résistant aux chocs. Les premiers (6; 7) et deuxièmes bras (4; 5) sont disposés à proximité et de façon relativement mobile les uns par rapport aux autres, ce qui est **caractérisé par le fait que** les deuxièmes bras (4; 5) du deuxième élément profilé en U (2) sont orientés de façon convergente dans un angle (α) divergeant de 90° par rapport à une surface de base (9) et que les premiers bras (6; 7) du premier élément profilé en U (1) forment de façon divergente un angle (β) divergeant de 90° par rapport à une plaque de base (8); Les largeurs d'ouverture formées entre les extrémités des deuxièmes bras (4; 5) et les extrémités des premiers bras (6; 7) ainsi que la taille des angles (α ; β) sont définies de façon à ce que les deuxièmes bras (4; 5) enserrent les premiers bras (6; 7).

2. Tampon d'amarrage conforme à la spécification 1, **caractérisé par le fait que** la taille des angles (α ; β) en fonction des longueurs des premiers (6; 7) et deuxièmes bras (4; 5) est choisie de façon à ce qu'en cas de charge unilatérale sur le deuxième élément profilé en U (2), les deuxièmes bras de ce dernier (4; 5) ne peuvent pas se dégager de l'enserrement des premiers bras (6;7).

3. Tampon d'amarrage conforme à la spécification 1 ou 2, **caractérisé par le fait que** les premiers bras (6; 7) sont soudés à la plaque de base (8), formant ainsi le premier élément profilé en U (1).

4. Tampon d'amarrage conforme à l'une des spécifications de 1 à 3, **caractérisé par le fait qu'**il est fixé à une rampe (12) au moyen d'une jonction mécaniquement amovible (11) avec la plaque de base (8).

5. Tampon d'amarrage conforme à l'une des spécifications de 1 à 4, **caractérisé par le fait qu'**un dispositif de support, de préférence un support en tôle perforé ou une grille, est placé au niveau de l'extrémité inférieure du premier élément profilé en U (1).
